# EUROPEAN PATENT APPLICATION

(11) **EP 1 477 887 A1**
(43) Date of publication of application: **17.11.2004**
(21) Application number: 03739646.2
(22) Date of filing: 29.01.2003
(51) Int. Cl.: G06F 3/033

(54) **TRACK BALL**

(30) Priority: 18.02.2002 JP 2002040763
(71) Applicant: Tamagawa Seiki Co. Ltd., Iida-shi, Nagano 395-8515 (JP)
(72) Inventor: HAMA, Nobuharu, TAMAGAWA SEIKI CO., LTD., Hachinohe-shi, Aomori 039-2245 (JP)
(74) Representative: Jenkins, Peter David
(86) International application number: PCT/JP2003/000866
(87) International publication number: WO 2003/069460

(57) **Abstract**

A track ball capable of preventing foreign matter such as water and dirt from entering the inside of a case having a sensor substrate stored therein, wherein a rotating body (4) and a rotation sensor (5) are installed separately from each other through the case (2) so that the foreign matter such as water and dirt can be prevented from entering from a ball side space (SB) continued with an environment on the outside of the track ball into a case internal space (SI) having the sensor substrate (6) stored therein, and the case portions (2A) and (2B) of the case (2) separating at least the rotating body (4) and the rotation sensor (5) from each other and forming a part of an electromagnetic wave transmission route for detecting detected electromagnetic wave by the rotation sensor (5) can transmit the electromagnetic wave detectable by the rotation sensor (5).

## Description

### Technical Field

The present invention relates to a track ball and, more particularly, to a track ball capable of preventing foreign matters such as water and dust from intruding into a case containing a sensor board.

### Background Art

A track ball, which is a pointing device for a computer and other various types of digital equipment, is configured so that by rotating a ball in an arbitrary direction with a palm or fingers, rotation is detected smoothly and continuously, and hence precise position control can be carried out easily.

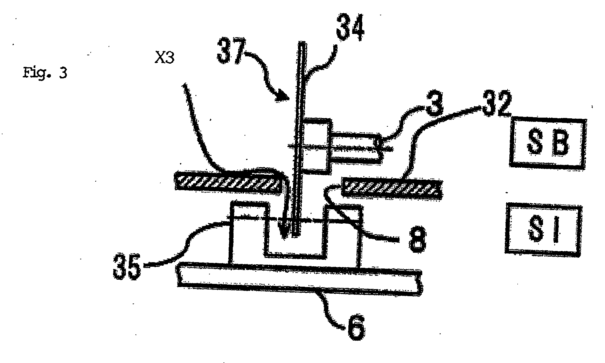

Figure 3 is an explanatory view showing a side sectional construction of a conventional track ball. In Figure 3, the conventional track ball has: a ball support structure 37 having a rotating shaft 3 which supports a ball and transmits the rotation of the ball and a rotating element 34 for causing a rotation sensor 35, described later, to read the rotation of the rotating shaft 3; the rotation sensor 35 which generates a pulse signal by detecting the rotation of the rotating element 34 in the ball support structure 37 and transmits the pulse signal to a sensor board 6, described later; the sensor board 6 for arithmetically operating the transmitted pulse signal to detect the rotational displacement; a case 32 which is a housing structure for the track ball and protectively contains the sensor board 6 therein; and the ball (not shown) , which is an input operation part. By this configuration, the rotation of ball produced by the operation of a palm or the like is transmitted to the rotating shaft 3 and is changed to the rotation of the rotating element 34. The rotation of the rotating element 34 is changed to a pulse signal by the rotation sensor 35, which can be detected as rotational displacement including direction after being subjected to processing by the sensor board 6.

In Figure 3, the rotating element 34 of a disc shape formed with a slit is provided at the end of the rotating shaft 3 for transmitting the rotation of ball so that a part of the rotating element 34 enters a case interior space SI in the case 32 containing the sensor board 6 from a ball-side space SB through a notch 8 provided in the case 32.

The rotation sensor 35, which is a transmission photosensor, has paired portions serving as a light emitting portion and a light receiving portion provided with the rotating element 34 being held therebetween, and the rotating element 34 is provided so as to be positioned between the paired portions. By this configuration, the ball-side space SB and the case interior space SI existing with the case 32 being a boundary therebetween are configured so as to communicate with each other through the notch 8 provided in the case 32.

A problem with the conventional track ball is that the presence of notch allows water, dust, dirt, and the like to intrude into the case from the ball-side space continuous with the environment on the outside of the track ball through the notch (X3 in Figure 3), and these foreign matters adhere to the sensor board, and exert an adverse influence on the performance and normal operation of the sensor board, which results in a decrease in detection accuracy of track ball.

The present invention has been made to solve the problem with the prior art, and an object thereof is to provide a track ball capable of preventing foreign matters such as water and dust from intruding into the case containing the sensor board.

### Disclosure of the Invention

The inventor conducted studies earnestly on the above-described problems, and resultantly concluded that the isolation of the case interior space from the ball-side space is effective in preventing the intrusion of foreign matters, and therefore, the above-described problems can be solved by taking measures capable of detecting the rotation expressed in the rotating element even in such a construction. The invention claimed in this application as measures for solving the above-described problems is as follows:
(1) A track ball having a ball; a ball support structure having a rotating shaft which supports the ball and transmits the rotation of the ball and a rotating element which is provided at the end of the rotating shaft to cause a rotation sensor, described later, to read the rotation of the ball; the rotation sensor which generates a pulse signal by detecting the rotation of the rotating element that expresses the rotation of the rotating shaft and transmits the pulse signal to a sensor board, described later; the sensor board for arithmetically operating the transmitted pulse signal to detect the rotational displacement; and a case which is a housing structure for the track ball and protectively contains the sensor board therein, characterized in that the rotating element and the rotation sensor are provided so as to be isolated from each other, and of the case, at least a portion, which forms a part of an electromagnetic wave transmission path for the rotation sensor to detect an electromagnetic wave to be detected, has a construction capable of transmitting an electromagnetic wave that can be detected by the rotation sensor.
(2) The track ball described in item (1), characterized in that the whole of the case has a construction capable of transmitting the electromagnetic wave.
(3) The track ball described in item (1) or (2), characterized in that the case has no notch for the rotation sensor to detect the rotation of the rotating element.
(4) The track ball described in any one of items (1) to (3), characterized in that the electromagnetic wave is visible rays, and the construction of the case for transmitting the electromagnetic wave is a transparent or semitransparent visible ray transmitting construction.
(5) The track ball described in any one of items (1) to (3), characterized in that the electromagnetic wave is infrared rays, and the construction of the case for transmitting the electromagnetic wave is an infrared ray transmitting construction.
(6) The track ball described in item (4) or (5), characterized in that the rotating element has a disc shape, the rotation sensor is a transmission photosensor, and the side sectional shape of the case in a portion in which the case is opposed to the peripheral edge portion of the rotating element (hereinafter referred to as "rotating element portion") is substantially in a U shape having a U-shaped portion.
(7) The track ball described in item (4) or (5), characterized in that the rotating element has a drum shape, and the rotation sensor is a reflective photosensor.
(8) A dustproof and waterproof track ball characterized in that foreign matters are prevented from intruding into the interior of the case containing the rotation sensor by the track ball described in any one of items (1) to (7).

In the present invention, as a material for the case of track ball, there is used a material capable of transmitting an electromagnetic wave, which is an object to be detected by the rotation sensor, such as a transparent or semitransparent visible ray transmitting material or an infrared ray transmitting material. Therefore, there is no need for providing a notch, the rotation sensor and the sensor board are provided so as to be isolated completely from the support structure for supporting the ball, and foreign matters such as water, dust, and dirt are prevented from intruding to the sensor board side, by which the durability and reliability of track ball are improved, and the above-described problems are solved.

### Brief Description of the Drawings

Figure 1 is an explanatory view showing a side sectional construction of a track ball in accordance with the present invention;
Figure 2 is an explanatory view showing a side sectional construction of another example of a track ball in accordance with the present invention; and
Figure 3 is an explanatory view showing a side sectional construction of a conventional track ball.

Symbols used in these figures designate the followings. 2, 22, 32 ... case, 2A, 2B, 22C ... case portion, 3 ... rotating shaft, 4, 24, 34 ... rotating element, 5, 25, 35 ... rotation sensor, 5A, 5B ... rotation sensor portion, 6 ... sensor board, 7, 27, 37 ... ball support structure, 8 ... notch, E ... light emitting portion, L, L' ... path of visible light etc., R ... light receiving portion, SB ... ball-side space, SI ... case interior space, X1, X2, X3 ... movement flow of foreign matters

### Best Mode for Carrying Out the Invention

The present invention will now be described in detail with reference to the accompanying drawings. The present invention is not limited to the embodiment described below. In the figures, the same symbols are applied to the same elements to give explanation.

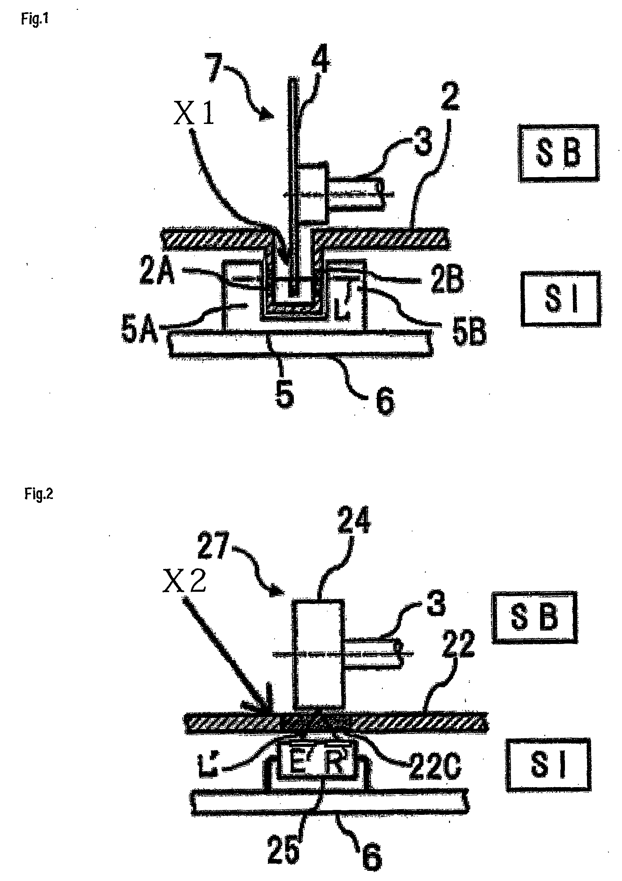

Figure 1 is an explanatory view showing a side sectional construction of a rotating element and its surrounding portion of one example of a track ball in accordance with the present invention. Figure 1 shows an example in a case where a transmission photosensor is used as a rotation sensor 5. In Figure 1, the track ball in accordance with the present invention has a ball support structure 7 having a rotating shaft 3 which supports a ball (not shown), being an input operation part, and transmits the rotation of the ball and a rotating element 4 which is provided at the end of the rotating shaft 3 to cause the rotation sensor 5, described later, to read the rotation of the ball; the rotation sensor 5 which generates a pulse signal by detecting the rotation of the rotating element 4 that expresses the rotation of the rotating shaft 3 and transmits the pulse signal to a sensor board 6, described later; the sensor board 6 for arithmetically operating the transmitted pulse signal to detect the rotational displacement; and a case 2 which is a housing structure for the track ball and protectively contains the sensor board 6 therein. The rotating element 4 and the rotation sensor 5 are provided so as to be isolated from each other by the case 2 so that foreign matters such as water and dust can be prevented from intruding into a case interior space SI containing the sensor board 6 etc. from a ball-side space SB, which is a space continuous with the environment on the outside of the track ball. Also, of the case 2, at least case portions 2A and 2B (both 2A and 2B are closely hatched portions in Figure 1), each of which isolates the rotating element 4 from the rotation sensor 5 and forms a part of an electromagnetic wave transmission path for the rotation sensor 5 to detect an electromagnetic wave to be detected, has a construction capable of transmitting an electromagnetic wave that can be detected by the rotation sensor 5.

Herein, the electromagnetic wave transmission path is a path through which an electromagnetic wave such as visible rays or infrared rays travels.

In Figure 1, this track ball can be configured so that the whole of the case 2, not limited to the case portions 2A and 2B, can have a construction capable of transmitting the electromagnetic wave. Also, unlike the conventional example, the case 2 need not be provided with a notch (refer to Figure 3) for the rotation sensor 5 to detect the rotation of the rotating element 4.

In Figure 1, the track ball has a construction such that the rotating element 4 has a disc shape formed with a slit, the rotation sensor 5 is a transmission photosensor, and the side sectional shape of the case 2 in a portion in which the case 2 is opposed to the peripheral edge portion of the rotating element 4 (hereinafter referred to as "rotating element portion") is substantially a U shape having a U-shaped portion.

In the track ball shown in Figure 1, the rotation sensor 5, which is the transmission photosensor, has portions 5A and 5B provided with a light emitting portion and a light receiving portion that are opposed to each other with the rotating element 4 being held therebetween, and the rotating element 4 is provided so as to be positioned between the portions 5A and 5B. The ball-side space SB in which the ball support structure 7 is provided and the case interior space SI in which the rotation sensor 5 and the sensor board 6 are provided are isolated from each other with the case 2 being a boundary. Therefore, the rotating element 4 and the rotation sensor 5 are provided in a state of being isolated from each other by the case 2, and the rotation sensor 5 and the sensor board 6 are constructed so as not to communicate with the ball-side space SB, that is, so as to be isolated from the space SB.

When visible rays are utilized as the electromagnetic wave, the track ball shown in Figure 1 can be constructed so as to transmit the electromagnetic wave by making the case 2 have a transparent or semitransparent visible ray transmitting construction. To obtain such a construction, the whole of the case 2 or at least the case portions 2A and 2B can be constructed by using a transparent or semitransparent material.

The term "semitransparent" in the present invention includes a large degree of transparency as long as visible rays of a degree enough to keep the function of track ball can be transmitted.

When infrared rays are utilized as the electromagnetic wave, the track ball shown in Figure 1 can be constructed so as to transmit the electromagnetic wave by making the case 2 have an infrared rays transmitting construction. To obtain such a construction, the whole of the case 2 or at least the case portions 2A and 2B can be constructed by using an infrared ray transmitting material. When other electromagnetic waves are utilized, similarly by making the case 2 have a construction capable of transmitting that electromagnetic wave, the same effect can be achieved.

In Figure 1, since the track ball in accordance with the present invention has the above-described construction, the rotation of the rotating element 4 of the ball support structure 7 provided in the ball-side space SB is detected through the case portions 2A and 2B capable of transmitting an electromagnetic wave that can be detected by the rotation sensor 5, for example, visible rays or infrared rays, or through the case 2. Specifically, in Figure 1, when the portion 5A of the rotation sensor 5, which is a transmission photosensor, is the light emitting portion and the portion 5B thereof is the light receiving portion, the electromagnetic wave such as visible rays or infrared rays emitted from the light emitting portion 5A enters the disc-shaped rotating element 4 existing in the ball-side space SB region through the case portion 2A of the case 2, being processed by the slit provided in the disc, and is received and detected as a pulse signal by the light receiving portion 5B through the case portion 2B. In Figure 1, for example, on a straight line L, there exists a path (electromagnetic wave transmitting path) through which visible rays etc. go from the light emitting portion 5A to the light receiving portion 5B through the case portions 2A and 2B.

Since the rotating element 4 need not be provided so as to enter the case interior space SI for the rotation sensor 5 to detect the rotation of the rotating element 4, the case 2, which is the boundary between both of the spaces SB and SI, need not be provided with a notch for causing these spaces SB and SI to communicate with each other. Specifically, the ball-side space SB in which the ball support structure 7 is provided is isolated from the case interior space SI containing the rotation sensor 5 and the sensor board 6 by the case 2. Therefore, foreign matters such as water and dust can be prevented from intruding into the case interior space SI from the ball-side space SB continuous with the environment on the outside of the track ball.

In other words, even if foreign matters such as water and. dust, which are originated from the environment on the outside of the track ball, are present in the ball-side space SB, the foreign matters do not intrude into the case interior space SI, which is isolated from the ball-side space SB by the case 2 (XI). Therefore, the foreign matters are prevented from intruding into the sensor board 6 and the rotation sensor 5, which are provided in the space SI.

The rotation of the rotating element 4 is detected by the rotation sensor 5 provided in the case interior space SI, and a pulse signal is generated by the rotation sensor 5. The pulse signal is transmitted to and arithmetically operated by the sensor board 6, by which the rotational displacement of ball is detected.

Figure 2 is an explanatory view showing a side sectional construction of a rotating element and its surrounding portion of another example of a track ball in accordance with the present invention. Figure 2 shows an example in a case where a reflective photosensor is used as a rotation sensor. In Figure 2, the track ball in accordance with the present invention has a ball support structure 27 having a rotating shaft 3 which supports a ball (not shown), being an input operation part, and transmits the rotation of the ball and a rotating element 24 which is provided at the end of the rotating shaft 3 to cause a rotation sensor 25, described later, to read the rotation of the rotating shaft 3; the rotation sensor 25 which generates a pulse signal by detecting the rotation of the rotating element 24 that expresses the rotation of the rotating shaft 3 and transmits the pulse signal to a sensor board 6, described later; the sensor board 6 for arithmetically operating the transmitted pulse signal to detect the rotational displacement; and a case 22 which is a housing structure for the track ball and protectively contains the sensor board 6 therein. The rotating element 24 and the rotation sensor 25 are provided so as to be isolated from each other by the case 22 so that foreign matters such as water and dust can be prevented from intruding into a case interior space SI containing the sensor board 6 etc. from a ball-side space SB that is a space continuous with the environment on the outside of the track ball. Also, of the case 22, at least a case portion 22C (a closely hatched portion in Figure 2), which isolates the rotating element 24 from the rotation sensor 25 and forms a part of an electromagnetic wave transmission path for the rotation sensor 25 to detect an electromagnetic wave to be detected, has a construction capable of transmitting an electromagnetic wave that can be detected by the rotation sensor 25.

In Figure 2, this track ball can be configured so that the whole of the case 22, not limited to the case portion 22C, can have a construction capable of transmitting the electromagnetic wave. Also, the case 22 need not be provided with a notch for the rotation sensor 25 to detect the rotation of the rotating element 24.

In Figure 2, the track ball has a construction such that the rotating element 24 has a drum shape, and the rotation sensor 25 is a reflective photosensor.

Unlike the track ball using a transmission photosensor as shown in Figure 1, the case 22 need not have a substantially U-shaped side cross section. Specifically, in the track ball using the reflective photosensor as shown in Figure 2, the case 22 needs neither a notch nor a substantially U-shaped portion, which achieves an effect that the number of processes can be decreased, and accordingly the manufacturing cost can be reduced.

In the track ball shown in Figure 2, the rotation sensor 25, which is the reflective photosensor, is provided at a position facing to the rotating element 24 with the case 22 being held therebetween, and has a light emitting portion E for emitting an electromagnetic wave to a reflector provided on the drum-shaped rotating element 24 and a light receiving portion R for receiving an electromagnetic wave reflected by the reflector. The ball-side space SB in which the ball support structure 27 is provided and the case interior space SI in which the rotation sensor 25 and the sensor board 6 are provided are isolated from each other by the case 2 with the case 22 being a boundary. Therefore, the rotating element 24 and the rotation sensor 25 are provided in a state of being isolated from each other by the case 22, and the rotation sensor 25 and the sensor board 6 are constructed so as not to communicate with the ball-side space SB, that is, so as to be isolated from the space SB.

When visible rays are utilized as the electromagnetic wave, the track ball shown in Figure 2 can be constructed so that the construction of the case 22 for transmit the electromagnetic wave is made a transparent or semitransparent visible ray transmitting construction. To obtain such a construction, the whole of the case 22 or at least the case portion 22C can be constructed by using a transparent or semitransparent material. When other electromagnetic waves are utilized, similarly the case 22 can be constructed by using the electromagnetic wave transmitting material.

When infrared rays are utilized as the electromagnetic wave, the construction of the case 22 for transmit the electromagnetic wave is made an infrared ray transmitting construction. To obtain such a construction, the whole of the case 22 or at least the case portion 22C can be constructed by using an infrared transmitting material.

In Figure 2, since the track ball in accordance with the present invention has the above-described construction, the rotation of the rotating element 24 of the ball support structure 27 provided in the ball-side space SB is detected through the case portion 22C capable of transmitting an electromagnetic wave that can be detected by the rotation sensor 25, for example, visible rays or infrared rays, or through the case 22. Specifically, in Figure 2, when the portion E of the rotation sensor 25, which is a reflective photosensor, is the light emitting portion and the portion R thereof is the light receiving portion, the electromagnetic wave such as visible rays or infrared rays emitted from the light emitting portion E enters the drum-shaped rotating element 24 existing in the ball-side space SB region through the case portion 22C of the case 22, being processed by the reflector provided on the drum-shaped rotating element 24, and is received and detected as a pulse signal by the light receiving portion R through the case portion 22C. In Figure 2, for example, on a straight line L', there exists a path through which visible rays etc. go from the light emitting portion E to the light receiving portion R via the case portion 22C through the reflector on the drum-shaped rotating element 24.

Since the rotating element 24 need not be provided in the case interior space SI for the rotation sensor 25 to detect the rotation of the rotating element 24, the case 22, which is the boundary between both of the spaces SB and SI, need not be provided with a notch for causing these spaces SB and SI to comnunicate with each other. Specifically, the ball-side space SB in which the ball support structure 27 is provided is isolated from the case interior space SI containing the rotation sensor 25 and the sensor board 6 by the case 22. Therefore, foreign matters such as water and dust can be prevented from intruding into the case interior space SI from the ball-side space SB continuous with the environment on the outside of the track ball.

In other words, even if foreign matters such as water and dust, which are originated from the environment on the outside of the track ball, are present in the ball-side space SB, the foreign matters do not intrude into the case interior space SI, which is isolated from the ball-side space SB by the case 22 (X2). Therefore, the foreign matters are prevented from intruding into the sensor board 6 and the rotation sensor 25, which are provided in the space SI.

The rotation of the rotating element 24 is detected by the rotation sensor 25 provided in the case interior space SI, and a pulse signal is generated by the rotation sensor 25. The pulse signal is transmitted to and arithmetically operated by the sensor board 6, by which the rotational displacement of ball is detected.

### Industrial Applicability

According to the track ball in accordance with the present invention, foreign matters such as water and dust can be prevented from intruding into the case containing the sensor board. Further, there is no need for providing a notch in the case, so that the manufacturing cost can be reduced.

Also, according to the track ball using the reflective photosensor, there is no need for partially forming the case substantially into a U shape, so that the manufacturing cost can further be reduced.

## Claims

1. A track ball having: a ball; a ball support structure having a rotating shaft which supports said ball and transmits the rotation of said ball and a rotating element which is provided at the end of said rotating shaft to cause a rotation sensor, described later, to read the rotation of said ball; said rotation sensor which generates a pulse signal by detecting the rotation of said rotating element that expresses the rotation of said rotating shaft and transmits said pulse signal to a sensor board, described later; said sensor board for arithmetically operating said transmitted pulse signal to detect the rotational displacement; and a case which is a housing structure for said track ball and protectively contains said sensor board therein, **characterized in that** said rotating element and said rotation sensor are provided so as to be isolated from each other, and of said case, at least a portion, which forms a part of an electromagnetic wave transmission path for said rotation sensor to detect an electromagnetic wave to be detected, has a construction capable of transmitting an electromagnetic wave that can be detected by said rotation sensor.

2. The track ball according to claim 1, **characterized in that** the whole of said case has a construction capable of transmitting said electromagnetic wave.

3. The track ball according to claim 1 or 2, **characterized in that** said case has no notch for said rotation sensor to detect the rotation of said rotating element.

4. The track ball according to any one of claims 1 to 3, **characterized in that** said electromagnetic wave is visible rays, and the construction of said case for transmitting said electromagnetic wave is a transparent or semitransparent visible ray transmitting construction.

5. The track ball according to any one of claims 1 to 3, **characterized in that** said electromagnetic wave is infrared rays, and the construction of said case for transmitting said electromagnetic wave is an infrared ray transmitting construction.

6. The track ball according to claim 4 or 5, **characterized in that** said rotating element has a disc shape, said rotation sensor is a transmission photosensor, and the side sectional shape of said case in a portion in which said case is opposed to the peripheral edge portion of said rotating element (hereinafter referred to as "rotating element portion") is substantially in a U shape having a U-shaped portion.

7. The track ball according to claim 4 or 5, **characterized in that** said rotating element has a drum shape, and said rotation sensor is a reflective photosensor.

8. A dustproof and waterproof track ball **characterized in that** foreign matters are prevented from intruding into the interior of said case containing said rotation sensor by the track ball according to any one of claims 1 to 7.
